# FASCICULE DE BREVET EUROPEEN

(11) **EP 3 025 053 B1**
(45) Date de publication et mention de la délivrance du brevet: **20.09.2017**
(21) Numéro de dépôt: 14747565.1
(22) Date de dépôt: 28.07.2014
(51) Int. Cl.: F03D 1/06

(54) **PALE D'EOLIENNE SEGMENTEE ET EOLIENNE MUNIE D'UNE TELLE PALE**
SEGMENTIERTE WINDTURBINENSCHAUFEL UND WINDTURBINE MIT SOLCH EINER SCHAUFEL
SEGMENTED WIND TURBINE BLADE AND WIND TURBINE PROVIDED WITH SUCH A BLADE

(30) Priorité: 26.07.2013 FR 1357384
(43) Date de publication de la demande: 01.06.2016
(73) Titulaire: Societe Europeenne d'Ingenierie et de Developpemen, 97110 Pointe a Pitre (FR)
(72) Inventeur: SALLES, Jean-Paul, F-76000 Rouen (FR)
(74) Mandataire: Pontet Allano & Associes
(86) Numéro de dépôt international: PCT/EP2014/066150
(87) Numéro de publication internationale: WO 2015/011292

(56) Documents cités:
- WO-A1-2006/002621
- WO-A2-2010/023299
- GB-A- 2 477 847
- US-A1- 2010 310 379
- US-A1- 2011 142 675

## Description

L'invention concerne une pale d'éolienne segmentée comprenant au moins deux segments démontables. Elle concerne également une éolienne munie d'une telle pale.

Le domaine de l'invention est le domaine des pales d'éolienne et en particulier des pales d'éolienne segmentées ou sectionnées.

Les pales d'éolienne segmentées ou sectionnées permettent, avantageusement de réduire la voilure en cas de cyclone ou de typhon.

### Etat de la technique

On connait de nombreuses pales pour éolienne qui sont segmentées, c'est-à-dire composées de plusieurs segments assemblés entre eux, de manière démontable ou non, pour former une pale.

Une pale segmentée présente l'avantage de pouvoir être transportée de manière plus simple comparée au transport d'une pale entière. En effet, il est plus facile de transporter des segments d'une pale présentant des dimensions plus petites comparées aux dimensions de la pale entière.

Une pale segmentée, bien que répondant aux difficultés de transport, pose la difficulté d'assemblage sur site des segments de pale. Selon une première solution, les segments de pale sont assemblés au sol avant la mise en place de la pale sur l'éolienne. Cette solution facilite l'assemblage des segments de pale mais il reste toujours la difficulté de la mise en place d'une pale entière sur l'éolienne.

Selon une deuxième solution, les segments de pale sont assemblés un par un directement sur l'éolienne en commençant par le segment de pale, dit proximal, se trouvant du côté du pied de pale et en terminant par le segment de pale, dit distal, se trouvant du côté du saumon de la pale. Cette deuxième solution répond à la difficulté de la mise en place de pale, puisqu'elle évite de manipuler une pale entière et de la hisser jusqu'au rotor de l'éolienne. Cependant, l'assemblage des segments de pale dans cette deuxième solution est plus difficile comparé à un assemblage au sol.

Le document US2011/0142675 A1 décrit une pale d'éolienne composée d'au moins deux segments qui sont assemblés entre eux de manière démontable. Ce document propose un profil d'assemblage spécifique entre deux segments de pale pour faciliter leur assemblage. Le profil d'assemblage se présente sous la forme générale d'un « Z » ou d'un « S » et comporte un moyen de guidage mâle/femelle.

Cependant, il s'avère que le profil d'assemblage proposé dans ce document ne répond pas vraiment à la difficulté d'assemblage de segments de pale directement sur l'éolienne, et l'assemblage des segments de pale reste difficile et consommateur en temps, et présente des risques de dégât pour les segments de pale.

L'invention a pour but de palier les inconvénients précités.

Notamment, le but de l'invention est de proposer une pale d'éolienne comprenant plusieurs segments démontables permettant un assemblage sur site, et en particulier directement sur une éolienne, plus simple comparé aux pales connues.

Un autre but de l'invention est de proposer une pale d'éolienne comprenant plusieurs segments démontables permettant un assemblage sur site, et en particulier directement sur une éolienne, moins consommateur en temps comparé aux pales connues.

Enfin, il est un but de l'invention de proposer une pale d'éolienne comprenant plusieurs segments démontables permettant un assemblage sur site, et en particulier directement sur une éolienne, présentant moins de risques de dégât pour la pale.

### Exposé de l'invention

L'invention permet d'atteindre au moins un des buts précités par une pale d'éolienne comportant une pluralité de segments démontables, deux segments adjacents étant assemblés entre eux suivant un profil, dit d'assemblage, ledit profil d'assemblage étant composé :
- d'une portion, dite centrale, comportant deux extrémités distantes l'une de l'autre dans la direction de l'axe de ladite pale ;
- d'au moins une première portion, dite d'attaque, s'étendant vers un bord d'attaque de ladite pale depuis une desdites extrémités de ladite portion centrale : en particulier la portion d'attaque rejoint la portion centrale au bord d'attaque ; et
- d'au moins une deuxième portion, dite de fuite, s'étendant vers un bord de fuite de ladite pale depuis l'autre desdites extrémités de ladite portion centrale : en particulier la portion de fuite rejoint la portion centrale au bord de fuite;
caractérisée en ce que chacune desdites portions d'attaque et de fuite d'un segment comporte un moyen de guidage pour l'assemblage d'un segment de pale avec un segment adjacent.

Autrement dit, le profil de découpe se présente sous la forme générale d'un « Z » ou d'un « S » et comporte des moyens de guidage sur les extrémités du « Z » ou du « S » pour guider un segment de pale sur un segment adjacent lors de leur assemblage.

Les segments de pale selon l'invention sont assemblés grâce à un profil d'assemblage spécifique :
- facilitant le positionnement d'un segment de pale par rapport à un segment de pale adjacent, et
- comportant des moyens de guidage à la fois du côté bord d'attaque et du côté bord de fuite, évitant ainsi toute rotation ou tout déplacement d'un segment par rapport au segment adjacent lors de leur assemblage.

La pale selon l'invention permet donc de faciliter à la fois le transport de la pale et sa mise en place sur une éolienne, en particulier sur des éoliennes nécessitant un dispositif anticyclonique. La pale selon l'invention permet en effet un assemblage, sûr et pouvant être répété, plus facile et moins consommateur en temps par rapport aux pales de l'état de la technique.

De plus, l'assemblage des segments de la pale selon l'invention présente moins de risque de dégâts pour la pale, car les moyens de guidage agencés à la fois côté bord d'attaque et côté bord de fuite permettent de stabiliser les segments de pales, et ainsi d'éviter des mouvements de rotation d'un segment par rapport à l'autre lors d'une opération d'assemblage des segments, ces mouvements pouvant abimer les segments de pale.

Dans la présente demande, pour deux segments adjacents, on désigne par « segment proximal », celui des segments adjacents se trouvant du côté du pied de la pale et par « segment distal » celui des segments adjacents se trouvant du côté du saumon de la pale.

En outre, dans la présente demande, le segment de pale comprenant le pied de pale reliant la pale à l'éolienne est appelée le « segment de pied », et le segment de pale comportant le saumon de pale est appelée le « segment de saumon ». Dans le cas particulier et préféré où la pale comporte uniquement deux segments, le segment proximal est le segment de pied et le segment distal est le segment de saumon.

De plus, pour un segment donné, on entend par « extrémité proximale », l'extrémité du segment se trouvant du côté du pied de la pale et « extrémité distale », l'extrémité du segment se trouvant du côté du saumon de la pale. Dans le cas particulier et préféré où la pale comporte uniquement deux segments, à savoir le segment de pied et le segment de saumon, le profil d'assemblage est formé sur l'extrémité proximale du segment de saumon, et sur l'extrémité distale du segment de pied.

Préférentiellement, le profil d'assemblage peut être réalisé de sorte que, pour chaque segment, chaque portion est formée par une surface reliant les deux faces du segment de pale se trouvant entre le bord de fuite et le bord d'attaque dudit segment.

En particulier, chaque portion peut être formée par une surface sensiblement perpendiculaire à un plan passant par les bords d'attaque et de fuite.

Avantageusement, les portions de fuite et d'attaque peuvent chacune être formée par une surface parallèle au plan formé par le pied de pale.

Alternativement, le profil d'assemblage peut être réalisé de sorte que, pour chaque segment, chaque portion forme une surface reliant le bord de fuite et le bord d'attaque dudit segment.

Préférentiellement, pour au moins un segment, le moyen de guidage de chacune des portions d'attaque et de fuite peut comprendre un moyen de guidage mâle, respectivement femelle, prévus pour coopérer avec un moyen de guidage femelle, respectivement mâle, agencé sur chacune des portions d'attaque et de fuite du segment adjacent, pour guider l'assemblage desdits segments adjacents de pale.

Bien entendu, l'une des portions d'attaque et de fuite d'un même segment peut comporter un moyen de guidage mâle et l'autre des portions d'attaque et de fuite peut comporter un moyen de guidage femelle. Dans ce cas, les portions correspondantes du segment adjacent comportent des moyens de guidage complémentaires.

Ainsi, chaque portion d'attaque, respectivement de fuite, d'un segment peut comporter un moyen mâle venant s'insérer dans un moyen femelle de la portion d'attaque, respectivement de fuite, d'un segment adjacent, lors de l'assemblage de deux segments adjacents pour assurer le bon positionnement de ces segments adjacents l'une par rapport à l'autre, et éviter toute rotation d'un des segments par rapport à l'autre.

Chaque moyen de guidage mâle/femelle peut présenter une forme dont la section diminue progressivement, tel un cône ou un prisme droit par exemple, en s'éloignant de la portion sur/dans laquelle ce moyen de guidage mâle/femelle est aménagé.

Dans le cas particulier et préféré où la pale comporte uniquement deux segments, les portions d'attaque et de fuite du segment de saumon peuvent comporter des moyens de guidage mâle, et les portions d'attaque et de fuite du segment de pied peuvent comporter des moyens de guidage femelle complémentaires auxdits moyens de guidage mâles.

Avantageusement, pour au moins un segment, au moins un moyen de guidage mâle peut être au moins en partie arrondi, ou présenter sur un de ses bords/côtés, et en particulier un bord/côté latéral, un angle non nul par rapport à l'axe de la pale ou à l'axe du segment de pale, en vue de faciliter sa pénétration dans le moyen de guidage femelle du segment adjacent.

Selon une caractéristique avantageuse et non limitative, le profil de découpe peut être positionné de telle sorte que la portion de fuite est plus proche du pied de pale comparée à la portion d'attaque.

Un tel profil de découpe permet, pour chaque segment de déplacer le centre de gravité du segment de pale du côté du bord de fuite, en laissant plus de matière du côté du bord de fuite. Ainsi, lors de l'assemblage il est plus facile de faire basculer le segment de pale et de l'emboiter sur un segment adjacent.

Cette caractéristique est particulièrement avantageuse, dans le cas où la pale comporte uniquement deux segments. Dans ce cas, les segments présentent des dimensions non négligeables de sorte que le déplacement du centre de gravité de la pale sur le bord de fuite permet de faciliter l'assemblage des segments, en facilitant le basculement du segment de saumon pour son alignement avec le segment de pied lors d'une opération d'assemblage. Une opération de désassemblage est facilitée pour les mêmes raisons.

Avantageusement, la portion centrale peut comprendre un moyen de guidage, dit central, pour guider l'assemblage de deux segments adjacents.

Un tel moyen de guidage central peut par exemple comprendre un couple de moyens mâle/femelle disposés chacun sur chacun des deux segments adjacents.

Un tel moyen de guidage central peut comprendre un couple de moyens formant glissière, disposés chacun sur un des segments adjacent, et facilitant le mouvement de translation relative des segments adjacents entre eux.

Un tel moyen de guidage est avantageusement dans le même plan d'assemblage que le ou les plans des autres moyens de guidages, ou encore un plan parallèle au(x) plan(s) des autres moyens de guidages.

Dans le cas particulier où la pale comporte uniquement deux segments, le moyen de glissière mâle peut être disposé sur la portion centrale du segment de saumon et le moyen de glissière femelle peut être disposé sur la portion centrale du segment de pied.

Selon une caractéristique particulière, la portion centrale peut former un angle non nul, notée β, par rapport à l'axe de la pale, et en particulier par rapport à l'axe du segment.

La valeur de l'angle non nul β peut être telle que 0<β≤90°, et préférentiellement telle que 0<β≤30°.

Une telle portion centrale formant un angle non nul par rapport à l'axe de la pale permet un assemblage plus aisé de deux segments adjacents de la pale, car elle permet d'accompagner l'assemblage des deux segments de pale tout en autorisant les moyens de guidage de guider et de centrer les deux segments entre eux. L'angle permet également de présenter plus facilement et plus rapidement l'un des segments adjacents par rapport à l'autre des segments adjacents, et permet une plus grande liberté lors des opérations d'assemblage et de désassemblage de deux segments adjacents.

En outre, la portion d'attaque, respectivement la portion de fuite, peut former un angle droit avec le bord d'attaque, respectivement de fuite, au niveau du profil d'assemblage.

Suivant une caractéristique avantageuse, la portion d'attaque, et/ou la portion de fuite, peut comporter :
- une partie, dite décroche, formant un angle approximatif de 45° par rapport au bord d'attaque, respectivement au bord de fuite, du côté opposé à la portion centrale, et
- une partie formant un angle droit par rapport au bord d'attaque, respectivement au bord de fuite, du côté de la portion centrale.

Autrement dit, depuis la portion centrale, la portion d'attaque, respectivement de fuite, commence par une partie formant un angle droit par rapport au bord d'attaque, respectivement au bord de fuite, et se termine par une décroche formant un angle approximativement de 45°, et plus généralement un angle non nul différent de 90°, par rapport au bord d'attaque, respectivement au bord de fuite.

Cette décroche forme un élément de guidage additionnel, servant surtout à la fin d'une opération d'assemblage, c'est-à-dire lorsque deux segments adjacents sont presque assemblés entre eux.

Cette décroche permet avantageusement, aussi, aux segments de ne pas se désolidariser lorsque le rotor est en fonctionnement.

Avantageusement, la décroche peut être réalisée vers le saumon de la pale en ce qui concerne la portion de fuite, et/ou vers le pied de la pale en ce qui concerne la portion d'attaque.

Avantageusement, la portion de fuite, et/ou la portion d'attaque, d'un des segments adjacents peut comprendre un ou plusieurs plots centreurs venant se loger dans un ou des évidements aménagées sur la portion de fuite, et/ou la portion d'attaque, du segment adjacent, de sorte à centrer les segments entre eux lors d'une opération d'assemblage.

De plus, les plots centreurs permettent de maintenir la continuité de surface sous les efforts qui s'appliquent sur la pale en fonctionnement, évitant ainsi des discontinuités de surfaces qui peuvent être causées par ces efforts.

Avantageusement, la pale selon l'invention peut en outre comprendre au moins un moyen d'attache de deux segments adjacents entre eux, après assemblage desdites segments adjacents.

Le moyen d'attache peut être commandé de manière hydraulique ou électrique.

Avantageusement, au moins un moyen d'attache peut être agencé dans/sur un moyen de guidage de la portion d'attaque et/ou de la portion de fuite.

Au moins un, préférentiellement chaque, moyen d'attache peut comprendre au moins un moyen de serrage, tel qu'une mâchoire hydraulique ou électrique, disposée dans/sur/derrière un moyen de guidage femelle d'un segment, et venant serrer au moins une partie du moyen de guidage mâle du segment adjacent, lorsque lesdits segments sont assemblés.

Alternativement ou en plus, au moins un, préférentiellement chaque, moyen d'attache peut comprendre au moins un plot, commandé par un vérin ou un moteur, et disposé dans/sur/derrière un moyen de guidage femelle d'un segment, et venant s'insérer dans au moins une ouverture aménagée dans le moyen de guidage mâle du segment adjacent, lorsque lesdits segments sont assemblés.

Chacun des moyens de guidage femelle peut comporter une ouverture d'accès aménagée, par exemple dans le fond du moyen de guidage femelle, permettant à un moyen d'attache, telle qu'un mâchoire, d'accéder au moyen de guidage mâle qui vient s'insérer dans le moyen de guidage femelle, par exemple à l'extrémité du moyen de guidage mâle, pour venir en contact contre le moyen de guidage mâle ou s'insérer dans une ouverture aménagée dans le moyen de guidage mâle.

Plus particulièrement, le moyen de guidage mâle peut avoir une longueur supérieure à la profondeur du moyen de guidage femelle et le moyen de guidage femelle peut comporter une ouverture aménagée dans son fond, de sorte que l'extrémité du moyen de guidage mâle dépasse le fond du moyen de guidage femelle d'une longueur suffisante pour pouvoir :
- être serrée par un moyen d'attache formé par une mâchoire, ou
- pour insérer un plot dans une ouverture aménagée au niveau de l'extrémité du moyen de guidage mâle.

La pale selon l'invention peut en outre comprendre au moins un moyen d'éjection d'un segment assemblé avec un segment adjacent, par poussée contre ledit segment ou ledit segment adjacent.

Un tel moyen d'éjection permet de faciliter la séparation de deux segments adjacents, en initiant cette séparation.

Un tel moyen d'éjection peut comprendre au moins un vérin hydraulique ou électrique.

Plus particulièrement, un tel moyen d'éjection peut comprendre un vérin au niveau de chacune des portions d'attaque et de fuite, et encore plus particulièrement au niveau de la surface formant chacune desdites portions d'attaque et de fuite.

Selon un mode de réalisation particulier, pour un segment donné, le/chaque moyen d'éjection peut être disposé sur l'extrémité distale du segment donné sur laquelle un segment adjacent est assemblé.

Ainsi, dans le cas de deux segments adjacents, le/chaque moyen d'éjection de l'extrémité distale d'un segment proximal vient pousser le segment adjacent distal fixé sur cette extrémité distale du segment proximal. Plus particulièrement, le/chaque moyen d'éjection vient pousser contre l'extrémité proximale du segment distal, encore plus particulièrement contre la surface formant chacune des portions d'attaque et de fuite de l'extrémité proximale du segment distal.

Dans le cas préféré où la pale comporte uniquement deux segments, à savoir un segment de pied et un segment de saumon, le moyen d'éjection comprend un ou plusieurs vérins, hydrauliques ou électriques, disposé sur l'extrémité d'assemblage du segment de pied (c'est-à-dire l'extrémité distale du segment de pied) sur laquelle est assemblé le segment de saumon, et venant pousser sur l'extrémité d'assemblage du segment de saumon (c'est-à-dire l'extrémité proximale du segment de saumon).

Un tel moyen d'éjection peut être, au moins en partie intégré dans l'épaisseur d'un des segments adjacent, préférentiellement dans l'épaisseur du segment proximal, et en particulier dans l'épaisseur du segment de pied.

Tel que décrit plus haut, la pale selon l'invention comporte, dans une version préférée, exactement deux segments de pale, l'un desdits segments, dit de pied, comportant le pied de ladite pale, et l'autre desdits segments, dit de saumon, comportant le saumon de la pale.

Dans cette version avantageuse, le profil de découpe peut être avantageusement positionné de sorte que la portion d'attaque et la portion de fuite de chacun des segments de pied et de saumon se trouvent de part et d'autre de la corde maximale de la pale, avec la portion de fuite se trouvant entre la corde maximale et le pied de la pale et la portion d'attaque se trouvant entre la corde maximale et le saumon de la pale.

Ainsi, chaque segment de pale présente une largeur plus faible comparée à la corde maximale de la pale, ce qui facilite la manipulation de chaque segment de pale et leur transport.

Dans cette version avantageuse, les moyens de guidage mâles peuvent avantageusement être agencés sur l'extrémité proximale du segment de saumon, et les moyens de guidage femelle sur l'extrémité distale du segment de pied, en regard desdits moyens de guidage mâles.

La pale selon l'invention peut en outre comprendre au moins un câble attaché d'une part au segment de saumon et d'autre part à un enrouleur du côté du segment de pied, et prévu pour tirer le segment de saumon vers le segment de pied lors de l'assemblage desdits segments, et maintenir ou accompagner le segment de saumon lors du désassemblage desdits segments.

Avantageusement, la pale selon l'invention peut comprendre:
- au moins un premier câble disposé du côté du bord d'attaque de la pale, et attaché d'une part au segment de saumon et d'autre part à un premier enrouleur disposé du côté du pied de la pale, et
- au moins un deuxième câble disposé du côté du bord de fuite de la pale, et attaché d'une part au segment de saumon et d'autre part à un deuxième enrouleur disposé du côté du pied de la pale ;
chacun desdits câbles étant prévu pour tirer le segment de saumon vers le segment de pied lors de l'assemblage desdits segments, et maintenir ou accompagner le segment de saumon lors du désassemblage desdits segments.

Au moins un, préférentiellement chaque, enrouleur peut être disposé dans le segment de pied de pale, en particulier du côté de l'extrémité proximale.

Une telle disposition permet d'une part de réduire l'encombrement de la pale et d'intégrer les enrouleurs dans la pale pour, par exemple, les utiliser même lorsque la pale n'est pas fixée à l'éolienne, et d'autre part de ne pas entraver le fonctionnement d'un système de calage de la pale par pas variable positionné du côté du pied de pale.

Les enrouleurs peuvent être commandés de manière synchronisée ou non, et préférentiellement de manière non synchronisée pour ajuster un angle d'assemblage et/ou de désassemblage du segment de saumon.

Préférentiellement, la vitesse de rotation de chaque enrouleur peut être réglée et commandée indépendamment de l'autre enrouleur, permettant ainsi de varier l'angle du segment de saumon par rapport au segment de pied lors de l'assemblage et/ou du désassemblage du segment de saumon de sorte à laisser plus de liberté sur le positionnement du segment de saumon, en particulier en ce qui concerne son inclinaison, par rapport au segment de pied lors des opérations d'assemblage et/ou de désassemblage desdits segments.

Selon un exemple de réalisation avantageux, au moins un, préférentiellement chaque, câble peut être attaché à un moyen de guidage mâle, et de préférence à une extrémité du moyen de guidage mâle.

Dans ce cas, le segment de pied peut comprendre, pour chaque câble :
- un chemin permettant au câble de traverser ledit segment de pied, de l'enrouleur jusqu'à l'extrémité d'assemblage, c'est-à-dire l'extrémité distale, dudit segment de pied, et
- une ouverture, dite de sortie, aménagée sur ladite extrémité d'assemblage du segment de pied permettant au câble de sortir dudit segment de pied pour être attaché au segment de saumon.

Plus particulièrement, l'ouverture de sortie d'au moins un, préférentiellement de chaque, câble peut être aménagée dans le moyen de guidage femelle du segment de pied, en particulier dans le fond du moyen de guidage femelle.

Au moins un, préférentiellement chaque, câble est un câble anti-giratoire, évitant/limitant ainsi la rotation du segment de saumon lors de la manipulation de ce segment.

Au moins un, préférentiellement chaque, câble peut présenter une longueur déterminée de sorte qu'il peut être accroché et décroché au segment de saumon lorsque ledit segment de saumon est déposé au sol.

Lorsque le segment de saumon est au sol et que le ou les câbles est/sont détaché(s), un contrepoids peut être accroché au câble, ou à chaque câble, afin de faciliter sa descente pour le remontage du segment de saumon lors d'une opération d'assemblage ultérieure.

La pale selon l'invention peut en outre comprendre des moyens de freinage du ou des câbles lors du désassemblage du segment de saumon.

De tels moyens de freinage peuvent être intégrés dans chaque enrouleur.

Avantageusement les moyens de freinage peuvent être agencés pour agir sur la rotation de l'enrouleur ou de chacun des enrouleurs, pour freiner le déroulement du ou des câbles.

Selon une caractéristique avantageuse de l'invention, au moins un, préférentiellement chaque, moyen choisi dans la liste suivante peut être commandé à distance, préférentiellement in situ, par l'intermédiaire d'une console de commande sans fil, pour réaliser un désassemblage du segment de saumon du segment de pied :
- le ou les moyens d'attache,
- le ou les enrouleurs,
- le moyen d'éjection, et
- le ou les moyens de freinage.

Par exemple, ces moyens peuvent être commandés pour réaliser les opérations suivantes :
- désactivation du ou des moyens d'attache,
- désactivation du ou des enrouleurs pour permettre le déroulement libre ou maîtrisé du ou des câbles,
- le cas échéant, activation du moyen d'éjection, et
- activation du ou des moyens de freinage lorsque le segment de saumon est à une distance prédéterminée du sol pour permettre au segment de saumon d'être récupéré et posé au sol à une vitesse faible.

Selon un autre aspect de l'invention, il est proposé une éolienne munie d'au moins une pale selon l'invention.

Plus particulièrement, chacune des pales de l'éolienne peut être une pale selon l'invention.

Par exemple, l'éolienne selon l'invention peut comporter deux, trois, quatre ou une multitude de pales.

D'autres avantages et caractéristiques apparaîtront à l'examen de la description détaillée d'exemples nullement limitatifs, et des dessins annexés sur lesquels :
- la FIGURE 1 est une représentation schématique partielle d'un exemple de deux segments adjacents de pales assemblés entre eux selon l'invention ;
- la FIGURE 2 est une représentation schématique des segments de la FIGURE 1 dans une configuration dans laquelle ils sont désassemblés ;
- les FIGURES 3-5 sont des représentations schématiques de chacun des segments de la FIGURE 1 de manière individuelle ;
- la FIGURE 6 est une représentation schématique d'un exemple de pale selon l'invention comprenant uniquement deux segments ;
- la FIGURE 7 est une représentation schématique partielle de la pale de la FIGURE 6 du côté du pied de la pale, et
- la FIGURE 8 est une représentation schématique d'une éolienne selon l'invention comprenant trois pales selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

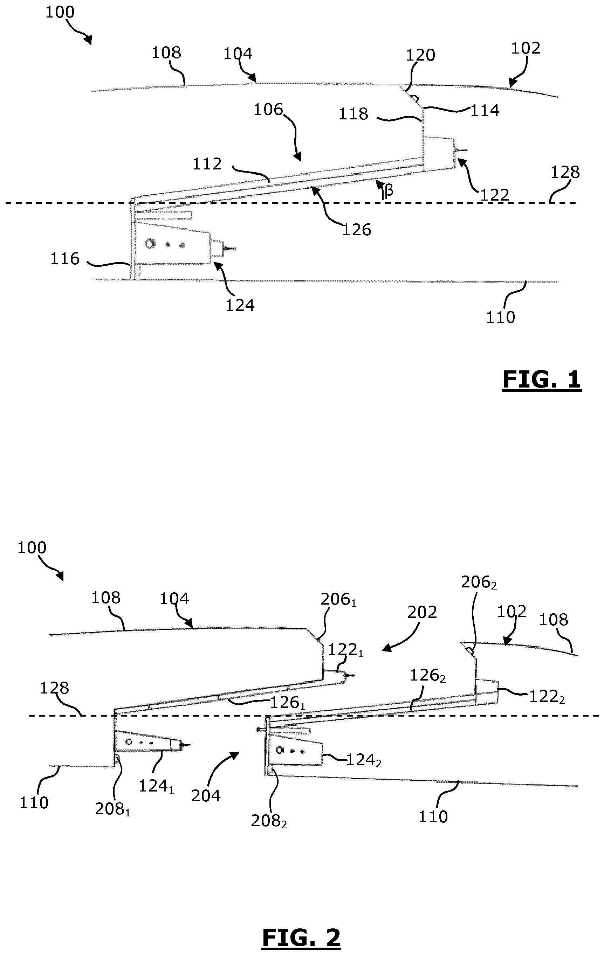

La FIGURE 1 est une représentation schématique partielle d'un exemple de deux segments de pales assemblés entre eux selon l'invention.

La FIGURE 2 est une représentation schématique des segments de la FIGURE 1 dans une configuration dans laquelle les segments sont désassemblés.

La pale 100 représentée sur la FIGURE 1 comprend au moins deux segments 102 et 104 assemblés entre eux suivant un profil d'assemblage 106. Sur la FIGURE 1, les segments 102 et 104 sont représentés dans une configuration assemblée.

Chacun des segments 102 et 104 peut être un segment proximal, c'est-à-dire celui des segments 102 et 104 le plus proche du pied de la pale, ou un segment distal, c'est-à-dire celui des segments 102 et 104 le plus éloigné du pied de la pale. Dans la suite de la description, on considère que le segment 102 est le segment proximal et le segment 104 est le segment distal.

La pale 100 comporte deux faces se rejoignant au niveau de deux bords opposés 108 et 110. Chacun des bords 108 et 110 peut être le bord d'attaque de la pale 100 ou le bord de fuite de la pale 100. Dans la suite de la description on considère que le bord 108 est le bord de fuite de la pale 100 et le bord 110 est le bord d'attaque de la pale.

Le profil d'assemblage 106, présente une forme générale en « Z » ou en « S », et comporte une portion centrale 112, une portion 114, dite de fuite, rejoignant la portion centrale au bord de fuite 108, et une portion 116, dite d'attaque, rejoignant la portion centrale 112 au bord d'attaque 110.

La portion de fuite 114 comprend une partie 118 formant angle droit par rapport au bord de fuite 108 au niveau du profil d'assemblage, et une partie 120 formant un angle de 45° par rapport au bord de fuite au niveau du profil d'assemblage, et plus généralement dirigée vers le saumon de la pale 100 et formant un angle non nul différent de 90°.

La portion d'attaque 116 forme un angle droit par rapport au bord d'attaque 110 au niveau du profil d'assemblage.

La pale 100 selon l'invention comporte un moyen de guidage 122, dit de fuite, aménagé sur la portion de fuite 114 du profil d'assemblage 106, et plus particulièrement sur la partie 118 de la portion de fuite 114 formant angle droit avec le bord de fuite 108.

En outre, la pale 100 comprend un moyen de guidage 124, dit d'attaque, aménagé sur la portion d'attaque 116 du profil d'assemblage 106.

La pale 100 représentée sur la FIGURE 1 comprend également un moyen de guidage 126, dit central, aménagé sur la portion centrale 112 du profil d'assemblage 106 et se présentant sous la forme d'une glissière.

La portion centrale 112, présente un angle β non nul par rapport à l'axe 128 de la pale 100.

Tel que montré sur la FIGURE 2, le moyen de guidage de fuite 122 est réalisé par un couple formé par un moyen de guidage mâle 122₁ et un moyen de guidage femelle 122₂.

De même, le moyen de guidage d'attaque 124 est formé par un couple réalisé par un moyen de guidage mâle 124₁ et un moyen de guidage femelle 124₂. Le moyen de guidage mâle 124₁ présente une longueur supérieure à la profondeur du moyen de guidage femelle 124₂. Ainsi, lorsque le moyen de guidage mâle 124₁ est inséré dans le moyen de guidage femelle 124₂, en configuration assemblée, l'extrémité du moyen de guidage mâle 124₁ dépasse le fond du moyen de guidage femelle 124₂, et peut être serrée par un moyen d'attache tel qu'une mâchoire hydraulique ou électrique.

Le moyen de guidage central 126 est également réalisé par un couple formé par un moyen de guidage mâle 126₁ et un moyen de guidage femelle 126₂.

Chaque moyen de guidage mâle, respectivement 122₁, 124₁ et 126₁, est disposé en regard du moyen de guidage femelle associé, respectivement 122₂, 124₂ et 126₂, et vient s'insérer dans le moyen de guidage femelle, respectivement 122₂, 124₂ et 126₂, dans la configuration assemblée montrée en FIGURE 1.

Dans l'exemple représenté sur les figures, les moyens de guidage mâle 122₁, 124₁ et 126₁ sont agencés sur le segment distal 104 et plus particulièrement sur l'extrémité proximale 202 du segment distal 104 et les moyens de guidage femelle 122₂, 124₂ et 126₂ sont agencés sur le segment proximal 102 et plus particulièrement sur l'extrémité distale 204 du segment proximal 102.

La pale 100 comprend en outre, sur chacune des portions de fuite 114 et d'attaque 116 du segment distal 104, un plot centreur, respectivement 206₁ et 208₁, venant se loger dans un évidement, respectivement 206₂ et 208₂, aménagé sur chacune des portions de fuite 114 et d'attaque 116 du segment proximal 102, et servant à centrer et bloquer les segments 102 et 104 entre eux lors d'une opération d'assemblage et en fonctionnement.

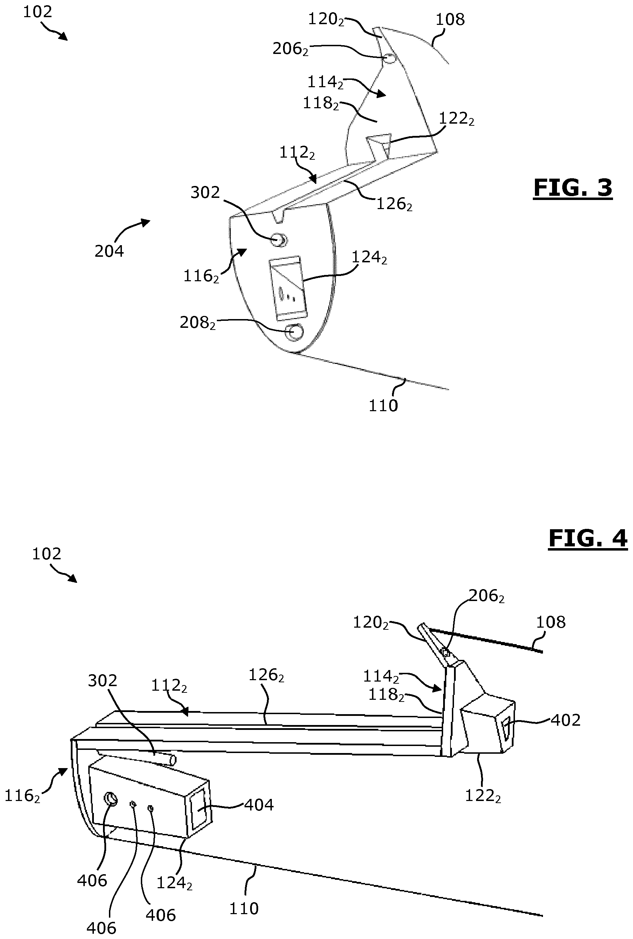

Nous allons maintenant décrire en référence aux FIGURES 3 et 4 le segment proximal.

La FIGURE 3 est une représentation schématique partielle du segment proximal suivant une vue de devant et la FIGURE 4 est une représentation schématique du segment proximal suivant une vue de côté.

Sur la FIGURE 4, la paroi extérieure du segment proximal a été ôtée pour plus de clarté de représentation.

Le segment proximal 102 comporte le profil d'assemblage 106 sur son extrémité distale 204, qui peut également être désignée comme extrémité d'assemblage.

Le profil d'assemblage 106 est réalisé sur l'extrémité distale 204 du segment proximal 102 par trois surfaces, respectivement 112₂, 114₂ et 116₂, se trouvant entre le bord d'attaque 110 et le bord de fuite 108, rejoignant chacune les deux faces de la pale 100 se trouvant entre le bord d'attaque 110 et le bord de fuite 108. L'ensemble des trois surfaces rejoint le bord d'attaque 110 au bord de fuite 108.

Plus particulièrement, la surface 112₂ forme la portion centrale 112 du profil d'assemblage 106 et comporte le moyen de guidage central femelle 126₂. La surface 114₂ forme la portion de fuite 114 du profil d'assemblage 106 et comporte le moyen de guidage de fuite femelle 122₂. La surface 116₂ forme la portion d'attaque 116 du profil d'assemblage 106 et comporte le moyen de guidage d'attaque femelle 124₂.

En outre, la surface 114₂, formant la portion de fuite 114, comprend une surface 118₂ réalisant la partie 118 de la portion de fuite 114, et une surface 120₂ réalisant la partie 120 de la portion de fuite 114 dirigée vers le saumon de la pale.

La pale 100 comprend également un moyen d'éjection, tel que par exemple un vérin 302, aménagé au niveau de la portion d'attaque 116 du segment proximal 102, et plus particulièrement dans/sur la surface 116₂ réalisant la portion d'attaque 116 sur le segment proximal 102. Ce vérin 302 vient pousser contre la portion d'attaque du segment distal 104 pour faciliter le désassemblage des segments proximal 102 et distal 104.

Ce vérin 302 peut être un vérin double sens et peut éventuellement être agencé également pour tirer le segment distal 104 vers le segment proximal 102 lors de l'assemblage des segments 102 et 104. Pour ce faire, le vérin 302 peut être doté d'une tête aimantée et/ou d'une plaque métallique, venant coopérer avec un aimant et/ou une plaque, disposé(e) en regard dudit aimant ou de ladite plaque, sur la portion d'attaque du segment distal 104.

Tel que montré sur la FIGURE 4, le moyen de guidage femelle 122₂, respectivement le moyen de guidage femelle 124₂, agencé dans la portion de fuite 114, respectivement la portion d'attaque 116, comporte une ouverture de sortie 402, respectivement 404, aménagée dans son fond :
- d'une part pour laisser dépasser l'extrémité du moyen de guidage mâle 124₁, respectivement 122₁, qui vient s'y insérer en configuration assemblée, en vue par exemple d'être maintenu par un moyen d'attache par serrage, tel qu'une mâchoire (non représentée) agencée dans l'épaisseur du segment proximal 102, derrière le (ou en partie arrière du) moyen de guidage femelle 122₂, respectivement 124₂, et
- d'autre part pour laisser passer un câble (non représenté) utilisé pour tirer le segment distal 104 vers le segment proximal 102 et dont une extrémité est attachée au segment distal 104.

En outre, le moyen de guidage femelle 124₂ agencé dans la portion d'attaque 116 comporte une (ou plusieurs de même ou différent diamètre) ouverture 406, dite d'attache, aménagée sur ses parois latérales et traversant entièrement le moyen de guidage femelle 124₂, prévue pour accueillir un moyen d'attache mâle, tel qu'un axe tronc conique (non représenté), traversant le moyen de guidage femelle 124₂ et le moyen de guidage mâle 124₁ qui vient s'y insérer en configuration assemblée, en vue d'attacher les segments proximal 102 et distal 104 entre eux.

Le moyen de guidage femelle 122₂, et/ou le moyen de guidage femelle 126₂ peut également comporter au moins une telle ouverture d'attache.

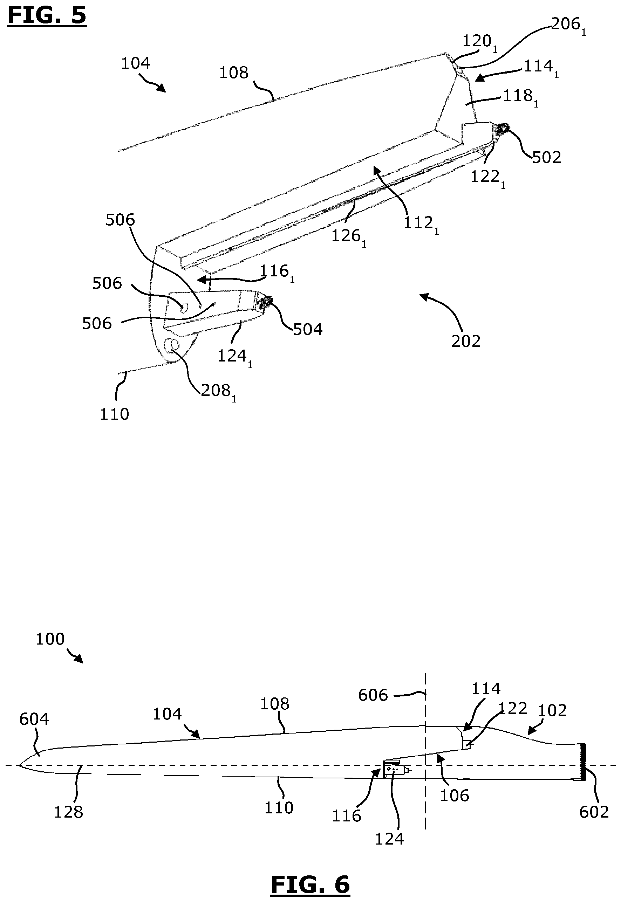

La FIGURE 5 est une représentation schématique partielle du segment distal suivant une vue de devant.

Le segment distal 104 comporte le profil d'assemblage 106 sur son extrémité proximale 202, qui peut également être désignée comme extrémité d'assemblage.

Le profil d'assemblage 106 est réalisé sur l'extrémité proximale 202 du segment distal 104 par trois surfaces, respectivement 112₁, 114₁ et 116₁, se trouvant entre le bord d'attaque 110 et le bord de fuite 108, rejoignant chacune les deux faces de la pale 100 se trouvant entre le bord d'attaque 110 et le bord de fuite 108. L'ensemble constitué par les trois surfaces 112₁, 114₁ et 116₁, rejoint le bord d'attaque 110 au bord de fuite 108.

Plus particulièrement, la surface 112₁ forme la portion centrale 112 du profil d'assemblage 106 et comporte le moyen de guidage central mâle 126₁. La surface 114₁ forme la portion de fuite 114 du profil d'assemblage 106 et comporte le moyen de guidage de fuite mâle 122₁. La surface 116₁ forme la portion d'attaque 116 du profil d'assemblage 106 et comporte le moyen de guidage d'attaque mâle 124₁.

En outre, la surface 114₁ formant la portion de fuite 114 comprend une surface 118₁ réalisant la partie 118 de la portion de fuite 114, et une surface 120₁ réalisant la partie 120 de la portion de fuite 114 dirigée vers le saumon de la pale 100.

La pale 100 comprend également deux moyens d'accroche 502 et 504, tels que deux crochets ou deux anneaux, disposés respectivement du côté du bord de fuite 108 et du côté du bord d'attaque 110 de la pale 100, permettant chacun d'accrocher un câble au segment distal 104. Dans l'exemple représenté sur la FIGURE 5, le moyen d'accroche 502, respectivement le moyen d'accroche 504, est agencé sur l'extrémité libre du moyen de guidage de fuite mâle 122₁, respectivement du moyen de guidage d'attaque mâle 124₁.

Par ailleurs, le moyen de guidage mâle 124₁, agencé dans la portion d'attaque 116, comporte une (ou plusieurs de même ou différent diamètre) ouverture 506, dite d'attache, aménagée sur ses parois latérales et traversant entièrement le moyen de guidage mâle 124₁. Cette ou chaque ouverture d'attache 506 est prévue pour accueillir un moyen d'attache mâle, tel qu'un axe à tronc conique (non représenté), traversant le moyen de guidage femelle 124₂ dans lequel le moyen de guidage mâle 124₁ s'insère en configuration assemblée, ainsi que le moyen de guidage mâle 124₁ lui-même, en vue d'attacher le segment distal 104 au segment proximal 102.

Bien entendu, le moyen de guidage mâle 122₁ agencé dans la portion de fuite 114 peut également comporter une telle ouverture d'attache.

Nous allons maintenant décrire, en référence aux figures 6-8, le cas particulier où la pale 100 comporte uniquement deux segments, à savoir les segments 102 et 104 décrits plus haut et représentés sur les FIGURES 1 à 5.

La FIGURE 6 est une représentation schématique d'une pale 100 comprenant uniquement deux segments, à savoir les segments 102 et 104 décrits plus haut.

La pale 100 représentée est donc constituée uniquement des segments, proximal 102 et distale 104.

Le segment proximal 102 de la pale 100 comporte le pied de pale 602 permettant d'accrocher la pale 100 à l'éolienne et plus particulièrement au rotor de l'éolienne. Ce segment proximal 102, est également appelé segment de pied.

Le segment distal 104 de la pale 100 comporte le saumon de pale 604. Ce segment distal 104, est également appelé segment de saumon.

Le profil d'assemblage 106 est positionné sur la pale 100 de sorte que les portions de fuite 114 et d'attaque 116 se trouvent de part et d'autre de la corde maximale de la pale 100 symbolisée par la ligne 606. Plus particulièrement la portion de fuite 114 se trouve entre la corde maximale 606 et le pied 602 de la pale 100 et la portion d'attaque 116 se trouve entre la corde maximale 606 et le saumon 604 de la pale.

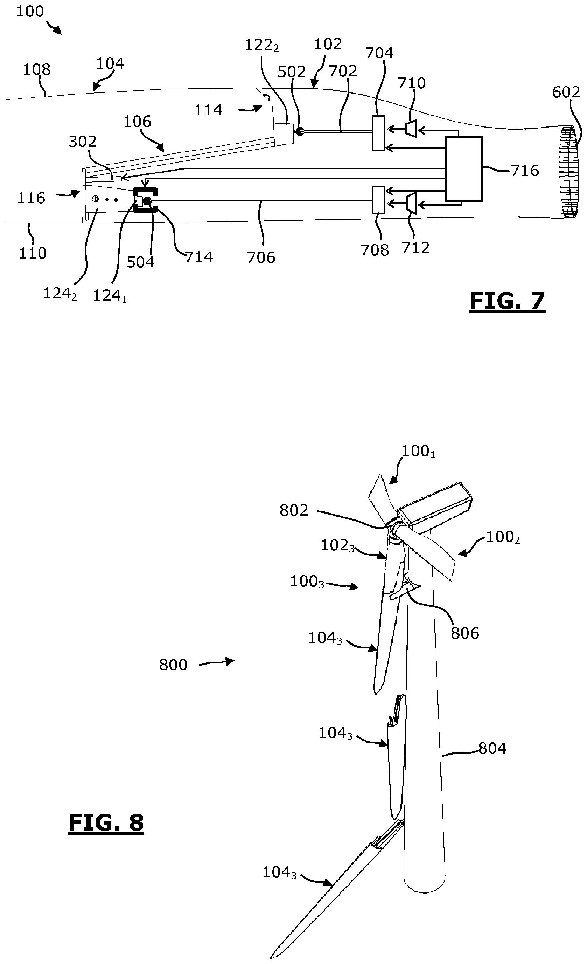

La FIGURE 7 est une représentation schématique partielle de la pale de la FIGURE 6 au niveau du pied de pale.

La pale 100 représenté sur la FIGURE 7 comprend un premier câble 702, dont une extrémité est accrochée, de manière démontable ou amovible, au moyen d'accroche 502 disposé sur le moyen de guidage mâle 122₁ agencé sur/dans la portion de fuite du segment de saumon 104. Ce premier câble 702 est enroulé et déroulé par un enrouleur 704 disposé dans l'épaisseur du segment de pied 102, du côté du pied de la pale 100. Le premier câble 702 traverse le segment de pied 102 de la pale 100 au travers d'un chemin (non représenté) aménagé dans l'épaisseur de ce segment de pied 102 et vient s'accrocher sur le moyen d'accroche 502. Lorsque les segments de pied 102 et de saumon 104 sont désassemblés, le câble 702 reste accroché au moyen d'accroche 502, et sort du segment de pied 102 au travers d'une ouverture de sortie aménagée dans le moyen de guidage femelle 122₂, par exemple l'ouverture de sortie 402. Lorsque les segments 102 et 104 sont complètement désassemblés le câble 702 peut être décroché du moyen d'accroche 502.

La pale 100, représentée sur la FIGURE 7, comprend un deuxième câble 706, dont une extrémité est accrochée, de manière démontable ou amovible, au moyen d'accroche 504 disposé sur le moyen de guidage mâle 124₁ agencé sur/dans la portion d'attaque du segment de saumon 104. Ce deuxième câble 706 est enroulé et déroulé par un enrouleur 708 disposé dans l'épaisseur du segment de pied 102, du côté du pied 602 de la pale 100. Le câble 706 traverse le segment de pied 102 de la pale 100 au travers d'un chemin (non représenté) aménagé dans l'épaisseur de ce segment de pied 102 et vient s'accrocher sur le moyen d'accroche 504. Lorsque les segments de pied 102 et de saumon 104 sont désassemblés, le câble 706 reste accroché au moyen d'accroche 504, et sort du segment de pied 102 au travers d'une ouverture de sortie aménagée dans le moyen de guidage femelle 124₂, par exemple l'ouverture de sortie 404. Lorsque les segments 102 et 104 sont complètement désassemblés le câble 706 peut être décroché.

La pale 100 comprend en outre pour chaque enrouleur 704 et 708, un moyen de freinage, respectivement 710 et 712, pour modifier la vitesse de rotation de chaque enrouleur. Ainsi, par exemple, lorsque les segments 102 et 104 sont désassemblés et que le segment de saumon 104 est à une distance prédéterminée du sol, les enrouleurs 704 et 706 sont freinés pour réaliser une dépose très lente, sur le sol, du segment de saumon 104 pour ne pas abimer le segment de saumon 104. Chaque moyen de freinage 710 et 712 est intégré dans l'épaisseur du segment de pied 102 du côté du pied 602 de la pale 100. Bien entendu, le moyen de freinage de chaque enrouleur peut être intégré directement dans l'enrouleur.

Par ailleurs, la pale 100 peut optionnellement comprendre une mâchoire 714 aménagée dans l'épaisseur du segment de pied 102, juste derrière le moyen de guidage femelle 124₂ de la portion d'attaque 116, et prévue pour venir serrer soit un câble d'assemblage, soit l'extrémité du moyen de guidage mâle 124₁ de la portion d'attaque 116, qui vient s'insérer dans le moyen de guidage femelle 124₂ en configuration assemblée.

Alternativement, le ou chaque moyen d'accroche peut comprendre une ouverture aménagée sur l'extrémité du moyen de guidage mâle, prévue pour accueillir l'extrémité d'un câble, fixée par tous moyens adéquats tels qu'un axe et une goupille.

Enfin, les enrouleurs 704 et 708, les moyens de freinage 710 et 712, la mâchoire 714, ainsi que le moyen d'éjection 302 décrits plus haut peuvent chacun être commandés à distance, préférentiellement in situ, de manière indépendante, par l'intermédiaire d'une console de commande sans fil coopérant avec un récepteur sans fil 716, pour réaliser un désassemblage du segment de saumon du segment de pied.

En particulier, un désassemblage des segments de pied 102 et de saumon 104 peut comprendre, par exemple en cas de cyclones, les opérations suivantes :
- désactivation du ou des moyens d'attache;
- désactivation des enrouleurs 704 et 708 pour permettre le déroulement contrôlé ou libre de chacun des câbles 702 et 706 ;
- activation du moyen d'éjection 302 pour initier la séparation des deux segments 102 et 104 ;
- activation du ou des moyens de freinage 710 et 712 lorsque le segment de saumon 104 est à une distance prédéterminée du sol pour permettre au segment de saumon de se poser sur le sol à une vitesse faible.

La FIGURE 8 est une représentation schématique d'une éolienne selon l'invention.

L'éolienne 800 représentée sur la FIGURE 8 comprend trois pales 100₁-100₃ identiques entre elles et identiques à la pale 100 décrite sur les FIGURES 6 et 7.

Les pales 100₁-100₃ sont fixées sur un rotor 802 agencé rotatif sur un châssis monté sur un mât vertical 804.

La FIGURE 8 montre, avec l'exemple de la pale 100₃, la trajectoire du segment de saumon 104₃ lors d'une opération d'assemblage (du sol vers le segment de pied 102₃), et lors d'une opération de désassemblage (du segment de pied 102₃ vers le sol). Les câbles 702 et 706 ont été omis pour plus de clarté.

L'éolienne 800 peut comprendre une plateforme 806 fixée au mât vertical 804 et repliable vers le mât vertical 804. Cette plateforme 806 a pour fonction de faciliter le guidage du segment de saumon 104 d'une pale 100 lors de sa descente/remontée. La plateforme 806 comprend une articulation par vérin hydraulique et deux câbles de maintien en sécurité. Elle est positionnée sur le mât 804 juste en-dessous de la portion d'attaque 116. Elle est dimensionnée pour qu'un opérateur puisse monter dessus pour des opérations de maintenance. Elle comporte une découpe, par exemple en forme de « V » ou « U » permettant d'accueillir le bord de fuite 108 du segment de saumon 104 et de permettre la descente et la remontée du segment de saumon 104 en restant assez proche de sa surface, et le guidage du bord de fuite 108 par exemple via des rouleaux montés sur ressorts.

Bien entendu l'invention n'est pas limitée aux exemples qui viennent d'être décrits.

## Revendications

1. Pale d'éolienne (100) comportant une pluralité de segments démontables (102, 104), deux segments adjacents (102, 104) étant assemblés entre eux suivant un profil (106), dit d'assemblage, ledit profil d'assemblage (106) étant composé :
- d'une portion (112), dite centrale, comportant deux extrémités distantes l'une de l'autre dans la direction de l'axe (128) de ladite pale (100),
- d'au moins une première portion (116), dite d'attaque, s'étendant vers un bord d'attaque (110) de ladite pale (100) depuis une desdites extrémités de ladite portion centrale (112), et
- d'au moins une deuxième portion (114), dite de fuite, s'étendant vers un bord de fuite (108) de ladite pale (100) depuis l'autre desdites extrémités de ladite portion centrale (112) ;
**caractérisée en ce que** chacune desdites portions d'attaque (116) et de fuite (114) d'un segment (102, 104) comporte un moyen de guidage (124, 122) pour l'assemblage d'un segment (102, 104) de pale avec un segment de pale adjacent (102, 104).

2. Pale (100) selon la revendication 1, **caractérisée en ce que** le moyen de guidage (124, 122) de chacune des portions d'attaque (116) et de fuite (114) d'un segment (102, 104) comprend un moyen de guidage mâle (124₁, 122₁), respectivement femelle (124₂, 122₂), prévus pour coopérer avec un moyen de guidage femelle (124₂, 122₂), respectivement mâle (124₁, 122₁), agencé sur chacune des portions d'attaque (116) et de fuite (114) du segment adjacent (102, 104), pour guider l'assemblage desdits segments (102, 104).

3. Pale (100) selon l'une quelconque des revendications précédentes, **caractérisée en ce que** la portion de fuite (114) est plus proche du pied (602) de la pale (100) comparée à la portion d'attaque (116) suivant l'axe (128) de la pale (100).

4. Pale (100) selon l'une quelconque des revendications précédentes, **caractérisée en ce que** la portion centrale (112) comprend un moyen de guidage (126), dit central, pour guider l'assemblage de deux segments adjacents (102, 104).

5. Pale (100) selon l'une quelconque des revendications précédentes, **caractérisée en ce que** la portion centrale (112) forme un angle (β) non nul par rapport à l'axe (128) de la pale (100).

6. Pale (100) selon l'une quelconque des revendications précédentes, **caractérisée en ce que** la portion d'attaque (116), respectivement de fuite (114), forme un angle droit avec le bord d'attaque (110), respectivement de fuite (108) au niveau du profil d'assemblage.

7. Pale (100) selon l'une quelconque des revendications précédentes, **caractérisée en ce que** la portion d'attaque et/ou la portion de fuite (114), comporte :
- une partie (120), dite décroche, formant un angle approximatif de 45° par rapport au bord d'attaque, respectivement de fuite (108), du côté opposé à la portion centrale (112), et
- une partie (118) formant un angle droit par rapport au bord d'attaque, respectivement de fuite (108), du côté de la portion centrale (112).

8. Pale (100) selon l'une quelconque des revendications précédentes, **caractérisée en ce qu'**elle comprend en outre des moyens d'attache (406, 506, 714) de deux segments adjacents (102, 104) entre eux, après assemblage desdites segments adjacents (102, 104).

9. Pale (100) selon la revendication 8, **caractérisée en ce qu'**au moins un moyen d'attache (406, 506, 714) est agencé dans/sur/derrière un moyen de guidage (124₁, 124₂) de la portion d'attaque (110) et/ou de la portion de fuite.

10. Pale (100) selon l'une quelconque des revendications précédentes, **caractérisée en ce qu'**elle comporte au moins un moyen d'éjection (302) d'un segment (104) assemblé avec un segment adjacent (102), par poussée contre ledit segment (104) ou ledit segment adjacent (102).

11. Pale (100) selon l'une quelconque des revendications, **caractérisée en ce qu'**elle comporte exactement deux segments de pale (102, 104), l'un (102) desdits segments, dit segment de pied, comportant le pied (602) de ladite pale (100), et l'autre (104) desdits segments, dit segment de saumon, comportant le saumon (604) de la pale, le profil d'assemblage (106) étant positionné de sorte que la portion d'attaque (116) et la portion de fuite (114) de chacun des segments (102, 104) se trouvent de part et d'autre de la corde maximale (606) de la pale (100), la portion de fuite (114) se trouvant entre la corde maximale (606) et le pied (602) de la pale (100) et la portion d'attaque (116) se trouvant entre la corde maximale (606) et le saumon (604) de la pale (100).

12. Pale (100) selon la revendication précédente, **caractérisée en ce qu'**elle comprend au moins un câble (702, 706) attaché d'une part au segment de saumon (104) et d'autre part à un enrouleur (704, 708) du côté du segment de pied (102), et prévu pour tirer le segment de saumon (104) vers le segment de pied (102) lors de l'assemblage desdites segments (102, 104) et maintenir le segment de saumon (104) lors du désassemblage desdits segments (102, 104).

13. Pale (100) selon l'une quelconque des revendications 11 ou 12, **caractérisée en ce qu'**elle comprend :
- au moins un premier câble (704) disposé du côté du bord d'attaque (110) de la pale (100), et attaché d'une part au segment de saumon (104) et d'autre part à un premier enrouleur (708) disposé du côté du pied (602) de la pale (100) ;
- au moins un deuxième câble (702) disposé du côté du bord de fuite (108) de la pale (100), et attaché d'une part au segment de saumon (104) et d'autre part à un deuxième enrouleur (704) disposé du côté du pied (602) de la pale (100), et
chacun desdits câbles (702, 706) étant prévu pour tirer le segment de saumon (104) vers le segment de pied (102) lors de l'assemblage desdits segments (102, 104) et maintenir le segment de saumon (104) lors du désassemblage desdits segments (102, 104).

14. Pale (100) selon l'une quelconque des revendications 12 ou 13, **caractérisée en ce qu'**elle comprend en outre au moins un moyen de freinage (710, 712) du ou des câbles (702, 706) lors du désassemblage du segment de saumon (104).

15. Eolienne (800) munie d'au moins une pale (100₁-100₃) selon l'une quelconque des revendications précédentes.

## Patentansprüche

1. Windkraftanlagenrotorblatt (100), umfassend eine Vielzahl von abnehmbaren Segmenten (102, 104), wobei zwei angrenzende Segmente (102, 104) mit einander nach einem sogenannten Zusammenbauprofil (106) zusammengebaut werden, wobei das Zusammenbauprofil (106) besteht aus:
- einem sogenannten Mittelabschnitt (112), der zwei in der Richtung der Mittellinie (128) des Rotorblatts (100) voneinander beabstandeten Enden umfasst,
- mindestens einem ersten, sogenannten Stirnabschnitt (116), der sich ausgehend von einem der Enden des Mittelabschnitts (112) in Richtung einer Stirnkante (110) des Rotorblatts (100) hin erstreckt, und
- mindestens einem zweiten, sogenannten Hinterabschnitt (114), der sich ausgehend von dem anderen der Enden des Mittelabschnitts (112) in Richtung einer Hinterkante (108) des Rotorblatts (100) hin erstreckt;
**dadurch gekennzeichnet, dass** jeweils der Stirnabschnitt (116) und der Hinterabschnitt (114) eines Segments (102, 104) ein Führungsmittel (124, 122) für den Zusammenbau eines Rotorblattsegments (102, 104) mit einem angrenzenden Rotorblattsegment (102, 104) umfasst.

2. Rotorblatt (100) nach Anspruch 1, **dadurch gekennzeichnet, dass** das Führungsmittel (124, 122) jeweils des Stirnabschnitts (116) und des Hinterabschnitts (114) eines Segments (102, 104) ein Steckerführungsmittel (124₁, 122₁) bzw. Buchsenführungsmittel (124₂, 122₂) umfasst, die dafür vorgesehen sind, mit einem Buchsenführungsmittel (124₂, 122₂) bzw. Steckerführungsmittel (124₁, 122₁) zusammenzuwirken, welche jeweils an dem Stirnabschnitt (116) und dem Hinterabschnitt (114) des angrenzenden Segments (102, 104) angeordnet sind, um den Zusammenbau der Segmente (102, 104) zu führen.

3. Rotorblatt (100) nach einem der vorhergehenden Ansprüche, **dadurch gekennzeichnet, dass** der Hinterabschnitt (114) näher zur Blattwurzel (602) des Rotorblatts (100), verglichen mit dem Stirnabschnitt (116) nach der Mittellinie (128) des Rotorblatts (100) liegt.

4. Rotorblatt (100) nach einem der vorhergehenden Ansprüche, **dadurch gekennzeichnet, dass** der Mittelabschnitt (112) ein sogenanntes Mittelführungsmittel (126) zur Führung des Zusammenbaus von zwei angrenzenden Segmenten (102, 104) umfasst.

5. Rotorblatt (100) nach einem der vorhergehenden Ansprüche, **dadurch gekennzeichnet, dass** der Mittelabschnitt (112) einen Winkel (β) nicht gleich Null zu der Mittellinie (128) des Rotorblatts (100) bildet.

6. Rotorblatt (100) nach einem der vorhergehenden Ansprüche, **dadurch gekennzeichnet, dass** der Stirnabschnitt (116) bzw. der Hinterabschnitt (114) einen rechten Winkel mit der Stirnkante (110) bzw. der Hinterkante (108) an dem Zusammenbauprofil bildet.

7. Rotorblatt (100) nach einem der vorhergehenden Ansprüche, **dadurch gekennzeichnet, dass** der Stirnabschnitt und/oder der Hinterabschnitt (114) umfasst:
- ein Teilstück (120), den sogenannten Vorsprung, das ungefähr einen Winkel von 45° zur Stirnkante bzw. zur Hinterkante (108) auf der dem Mittelabschnitt (112) gegenüberliegenden Seite bildet, und
- ein Teilstück (118), das einen rechten Winkel zur Stirnkante bzw. zur Hinterkante (108) auf der Seite des Mittelabschnitts (112) bildet.

8. Rotorblatt (100) nach einem der vorhergehenden Ansprüche, **dadurch gekennzeichnet, dass** es außerdem Befestigungsmittel (406, 506, 714) von zwei angrenzenden Segmenten (102, 104) miteinander nach dem Zusammenbau der angrenzenden Segmente (102, 104) umfasst.

9. Rotorblatt (100) nach Anspruch 8, **dadurch gekennzeichnet, dass** mindestens ein Befestigungsmittel (406, 506, 714) in/auf einem/hinter ein Führungsmittel (124₁, 124₂) des Stirnabschnitts (110) und/oder des Hinterabschnitts angeordnet ist.

10. Rotorblatt (100) nach einem der vorhergehenden Ansprüche, **dadurch gekennzeichnet, dass** es mindestens ein Mittel zum Auswurf (302) eines mit einem angrenzenden Segments (102) zusammengebauten Segments (104) durch Schub gegen das Segment (104) oder das angrenzende Segment (102) umfasst.

11. Rotorblatt (100) nach einem der Ansprüche, **dadurch gekennzeichnet, dass** es genau zwei Rotorblattsegmente (102, 104) umfasst, wobei das eine (102) der Segmente, das sogenannte Blattwurzelsegment, die Blattwurzel (602) des Rotorblatts (100) umfasst und das andere (104) der Segmente, das sogenannte Endkappensegment, die Endkappe (604) des Rotorblatts umfasst, wobei das Zusammenbauprofil (106) derart angeordnet ist, dass der Stirnabschnitt (116) und der Hinterabschnitt (114) der jeweiligen Segmente (102, 104) auf beiden Seiten der maximalen Blattsehne (606) des Rotorblatts (100) gelagert sind, wobei der Hinterabschnitt (114) zwischen der maximalen Blattsehne (606) und der Blattwurzel (602) des Rotorblatts (100) gelagert ist und der Stirnabschnitt (116) zwischen der maximalen Blattsehne (606) und der Endkappe (604) des Rotorblatts (100) gelagert ist.

12. Rotorblatt (100) nach dem vorhergehenden Anspruch, **dadurch gekennzeichnet, dass** es mindestens ein Seil (702, 706) umfasst, welches einerseits an dem Endkappensegment (104) und andererseits an einem Aufwickler (704, 708) seitens des Blattwurzelsegments (102) befestigt ist und dafür vorgesehen ist, beim Zusammenbau der Segmente (102, 104) das Endkappensegment (104) zu dem Blattwurzelsegment (102) hin zu ziehen und bei dem Auseinanderbau der Segmente (102, 104) das Endkappensegment (104) festzuhalten.

13. Rotorblatt (100) nach einem der Ansprüche 11 oder 12, **dadurch gekennzeichnet, dass** es umfasst:
- mindestens ein erstes Seil (704), welches auf der Seite der Stirnkante (110) des Rotorblatts (100) angeordnet ist und einerseits an dem Endkappensegment (104) und andererseits an einem ersten, auf der Seite der Blattwurzel (602) des Rotorblatts (100) angeordneten Aufwickler (708) befestigt ist;
- mindestens ein erstes Seil (702), welches auf der Seite der Hinterkante (108) des Rotorblatts (100) angeordnet ist und einerseits an dem Endkappensegment (104) und andererseits an einem zweiten, auf der Seite der Blattwurzel (602) des Rotorblatts (100) angeordneten Aufwickler (704) befestigt ist, und
wobei jedes der Seile (702, 706) dafür vorgesehen ist, bei dem Zusammenbau der Segmente (102, 104) das Endkappensegment (104) zum Blattwurzelsegment (102) hin zu ziehen und das Endkappensegment (104) bei dem Auseinanderbau der Segmente (102, 104) festzuhalten.

14. Rotorblatt (100) nach einem der Ansprüche 12 oder 13, **dadurch gekennzeichnet, dass** es außerdem mindestens eine Bremsvorrichtung (710, 712) des mindestens einen Seils (702, 706) bei dem Auseinanderbau des Endkappensegments (104) umfasst.

15. Windkraftanlage (800) mit mindestens einem Rotorblatt (100₁-100₃) nach einem der vorhergehenden Ansprüche.

## Claims

1. A wind turbine blade (100) comprising a plurality of segments which can be dismantled (102, 104), two adjacent segments (102, 104) being assembled together following a profile (106), called assembly profile, said assembly profile (106) being composed of:
- a portion (112), called central portion, comprising two ends distant from one another in the direction of the axis (128) of said blade (100),
- at least one first portion (116), called leading portion, extending towards a leading edge (110) of said blade (100) from one of said ends of said central portion (112), and
- at least one second portion (114), called trailing portion, extending towards a trailing edge (108) of said blade (100) from the other of said ends of said central portion (112);
**characterized in that** each of said leading (116) and trailing (114) portions of a segment (102, 104) comprises a guiding means (124, 122) for assembling one blade segment (102, 104) with an adjacent blade segment (102, 104).

2. The blade (100) according to claim 1, **characterized in that** the guiding means (124, 122) of each of the leading (116) and trailing (114) portions of a segment (102, 104) comprises a male (124₁, 122₁), respectively female (124₂, 122₂) guiding means, provided in order to cooperate with a female (124₂, 122₂), respectively male (124₁, 122₁) guiding means, arranged on each of the leading (116) and trailing (114) portions of the adjacent segment (102, 104), in order to guide the assembly of said segments (102, 104).

3. The blade (100) according to any one of the preceding claims, **characterized in that** the trailing portion (114) is closer to the root (602) of the blade (100) compared with the leading portion (116) along the axis (128) of the blade (100).

4. The blade (100) according to any one of the preceding claims, **characterized in that** the central portion (112) comprises a guiding means (126), called central guiding means, for guiding the assembly of two adjacent segments (102, 104).

5. The blade (100) according to any one of the preceding claims, **characterized in that** the central portion (112) forms a non-zero angle (β) with respect to the axis (128) of the blade (100).

6. The blade (100) according to any one of the preceding claims, **characterized in that** the leading (116), respectively trailing (114), portion forms a right angle with the leading (110), respectively trailing (108), edge at the assembly profile.

7. The blade (100) according to any one of the preceding claims, **characterized in that** the leading portion and/or the trailing portion (114), comprises:
- a part (120), called release part, forming an angle of approximately 45° with respect to the leading, respectively trailing (108), edge, on the side opposite the central portion (112), and
- a part (118) forming a right angle with respect to the leading, respectively trailing (108), edge, on the side of the central portion (112).

8. The blade (100) according to any one of the preceding claims, **characterized in that** it also comprises means (406, 506, 714) for fastening two adjacent segments (102, 104) together, after assembly of said adjacent segments (102, 104).

9. The blade (100) according to claim 8, **characterized in that** at least one fastening means (406, 506, 714) is arranged in/on/behind a guiding means (124₁, 124₂) of the leading portion (110) and/or of the trailing portion.

10. The blade (100) according to any one of the preceding claims, **characterized in that** it comprises at least one means (302) for ejecting a segment (104) assembled with an adjacent segment (102), by thrusting against said segment (104) or said adjacent segment (102).

11. The blade (100) according to any one of the claims, **characterized in that** it comprises exactly two blade segments (102, 104), one (102) of said segments, called root segment, comprising the root (602) of said blade (100), and the other (104) of said segments, called tip segment, comprising the tip (604) of the blade, the assembly profile (106) being positioned in such a way that the leading portion (116) and the trailing portion (114) of each of the segments (102, 104) are situated on either side of the maximum chord (606) of the blade (100), the trailing portion (114) being situated between the maximum chord (606) and the root (602) of the blade (100) and the leading portion (116) being situated between the maximum chord (606) and the tip (604) of the blade (100).

12. The blade (100) according to the preceding claim, **characterized in that** it comprises at least one cable (702, 706) fastened at one end to the tip segment (104) and at the other end to a reel (704, 708) on the side of the root segment (102), and provided for pulling the tip segment (104) towards the root segment (102) during the assembly of said segments (102, 104) and holding the tip segment (104) during the disassembly of said segments (102, 104).

13. The blade (100) according to any one of claims 11 or 12, **characterized in that** it comprises:
- at least one first cable (704) arranged on the side of the leading edge (110) of the blade (100), and fastened at one end to the tip segment (104) and at the other end to a first reel (708) arranged on the side of the root (602) of the blade (100);
- at least one second cable (702) arranged on the side of the trailing edge (108) of the blade (100), and fastened at one end to the tip segment (104) and at the other end to a second reel (704) arranged on the side of the root (602) of the blade (100), and
each of said cables (702, 706) being provided for pulling the tip segment (104) towards the root segment (102) during the assembly of said segments (102, 104) and holding the tip segment (104) during the disassembly of said segments (102, 104).

14. The blade (100) according to any one of claims 12 or 13, **characterized in that** it also comprises at least one means (710, 712) for braking the cable or cables (702, 706) during the disassembly of the tip segment (104).

15. A wind turbine (800) equipped with at least one blade (100₁-100₃) according to any one of the preceding claims.
